# EUROPEAN PATENT APPLICATION

(11) **EP 2 175 509 A1**
(43) Date of publication of application: **14.04.2010**
(21) Application number: 09171162.2
(22) Date of filing: 24.09.2009
(51) Int. Cl.: H01M 4/68, H01M 4/73

(54) **An alloy**

(30) Priority: 08.10.2008 TR 200807567
(71) Applicant: Mutlu Aku ve Malzemeleri Sanayi Anonim Sirketi, Istanbul (TR)
(72) Inventor: Alim, Ali, Istanbul (TR)
(74) Representative: Dericioglu, Ekin

(57) **Abstract**

The present invention relates to an alloy which constitutes positive grid of lead-acid batteries. Content of calcium, tin and aluminum in the alloy is mentioned. The surface of the melting lead is covered and the calcium is prevented to transmit to slag as oxidized during grid or strip casting, with appropriate amounts of aluminum in alloys with calcium.

## Description

### Field of the Invention

The present invention relates to an alloy which constitutes positive grid of lead-acid batteries.

### Prior Art

Grids of positive electrode are generally produced by methods of mold casting and expansion from strip. The fact that the produced grids of positive electrode have expected performance and resistance in the battery, along with other design features, depends on feature of the alloy used and stability of the process.

Various lead-calcium-tin-silver alloys are used in production of positive electrode grids of lead-acid batteries. There are different uses in the art in terms of ratios of alloy elements.

The European patent document no.EP0959509A1**,** a state of the art application, discloses an alloy which has positive electrode grid of mold casting type and content of which is 0,4-0,6% calcium, 0,5-1,0% tin, 0,01-0,06% silver and minimum 0,012% aluminum.

The Unites States patent document no. US 6649306, a state of the art application, discloses an alloy for the grid which is used in lead-acid batteries. The weight ratios of the grid alloy are 0,06-0,082% calcium, 1,0-1,2% tin, 0,005-0,020% silver and preferably up to 0,025% aluminum and it is stated that there may be copper between 0.005-0.05%.

The Ukrainian patent document no. UA66069**,** a state of the art application, discloses a lead-acid battery which will operate at high thermal changes. The weight ratios in the content of the positive electrode of the battery are 0,04%-0,06% calcium, 0,6%-1,5% tin, 0,01%-0,015% barium and 0,005%-0,3% aluminum. This electrode does not contain silver nonetheless it contains barium.

The Japan patent document no. JP2004139870**,** a state of the art application, discloses grid which is used in lead-acid batteries. The ratios of substance weight in the content of the grid are 0,02%-0,05% calcium, 0,4%-2,5% tin, 0,005%-0,04% aluminum and 0,002%-0,014% barium. In addition 0,005%-0,07% silver, 0,01%-0,1% bismuth, 0,001%-0,05% thallium can be added.

The Japan patent document no. JP2002194463**,** a state of the art application, discloses lead alloy for lead-acid batteries. The weight percentages of the substances existing in the alloy are 0,04%-0,10% calcium, 0,5%-2% tin, 0,04%-0,06% aluminum, 0,01%-0,10% silver and 0,001%-0,15% barium.

The Chinese patent document no. CN1619867**,** a state of the art application, discloses a battery grid in the plate. The weight percentages of the substances existing in the grid are 0,03%-0,15% calcium, 0,01%-0,04% aluminum, 0,5%-3,0% tin, 0,001%-0,2% barium. In addition the grid may contain 0,02%-0,15% silver or 0,03%-0,15% bismuth.

The Unites States patent document no. US2005142443**,** a state of the art application, discloses lead alloy for battery grid in the plate. The weight percentages of the substances included by the alloy are 0,05%-0,07% calcium, 0,9%-1,3% tin, 0,006%-0,010% silver, 0,015%-0,025% aluminum and 0,010%-0,017% barium.

### Summary of the Invention

The object of the invention is to realize an alloy which enables homogeneous distribution wherein aluminum is used in small quantities with keeping the determined proportions of calcium, tin and silver in the alloy as fixed.

Another objective of the invention is to realize an alloy which enables the manufacturing process to operate correctly and the battery to be of good quality by this means.

Another objective of the invention is to realize an alloy in appropriate contents which extends the life of the batteries and enables to undergo less corrosion.

Yet another objective of the present invention is to realize an alloy which covers the surface of the melting lead and prevents the calcium to transmit to slag as oxidized during the grid or strip casting with the use of aluminum in alloys with calcium. It is seen from the data in Table 1 that 0,008% aluminum content on average is sufficient for this.

Another object of the invention is to realize an alloy having low aluminum content in order to prevent problems that damage homogeneity in strip structures with effect of high aluminum content, lead to cracks on the grid and cause the active substance not to be able to hold on to the grid well.

### Detailed Description of the Invention

The inventive alloy contains calcium between 0,050% and 0,070%, tin between 0,80% and 1,1%, silver between 0,008% and 0,022% and aluminum less than %0,012 preferably between 0,005% and %0,011.

The ratios of positive electrode alloy elements influence battery features and contribute to process values of it and function properly as well. Some of these elements have an effect on ratio and distribution of other elements during the process.

Aluminum existence in alloys with calcium prevents the calcium to transmit to slag as oxidized during the grid or strip casting by means of covering the surface of the melting lead. When ratio of the aluminum covering the surface increases, lines are formed which lead to weakening in the active substance to hold on to the grid and cracking on some areas. Limiting the ratio of the participating aluminum gives rise to eliminate these lines. There is aluminum between 0,005-0,011 % as alloy content in the positive electrode grid (Table 1). By means of enabling a fixed process with the inventive content, the product quality is enhanced and an economic operation is provided.

**Table 1. The protection levels of 0,06% calcium in the alloy with different ratios of aluminum**

| **Example No** | **Ca %** | **Al %** |
|---|---|---|
| 1 | 0,060 | 0,011 |
| 2 | 0,059 | 0,009 |
| 3 | 0,060 | 0,007 |
| 4 | 0,058 | 0,005 |
| 5 | 0,051 | 0,003 |
| 6 | 0,040 | 0,001 |

The features of the battery parts must be in desired level and the change tolerance range must not be large. An excess which may be in alloy ratio tolerances of the positive electrode grids creates variable-featured products. When the amount of aluminum exceeds optimum ratios, problems take place in strip casting system. The alloy ratios given for calcium, tin and silver involved in the alloy must remain fixed at specific values. Otherwise changing the content ratios too much does not enable stability in production process. For example Rockwell hardnesses of the grids produced by using an alloy containing 0,03% silver, 0,045% calcium and tin changing between 0,05-1,0% change between 0-50 after 48 hours and 45-60 after 7 days. In silver variation between 0.01-0.06%, a similar difference is experienced. This situation bears an important risk with respect to stability of manufacturing process.

## Claims

1. An alloy which constitutes grids of positive electrode from mold casted or expanded strip for lead-acid batteries **comprising** 0,05%-0,07% calcium, 0,80%-1,1% tin, 0,008%-0,022% silver and **characterized by** 0,005%-0,011% aluminum.

2. An alloy according to Claim 1, **characterized by** aluminum less than 0,012% which is used in order that calcium does not transmit to slag as oxidized during grid casting.

## Amended claims

### Amended claims in accordance with Rule 137(2) EPC.

**1.** An alloy for using in production of grids of positive electrode from mold casted or expanded strip comprising 0.05%-0.07% calcium, 0.80%-1.1% tin, 0.008%-0.022% silver and **characterized by** 0.005%-0.011% aluminum.

**2.** An alloy according to Claim 1, **characterized by** aluminum less than 0.012% which covers the surface of the melting lead and prevents calcium from oxidizing and transmitting to slag during grid or strip casting.
